# EUROPÄISCHE PATENTANMELDUNG

(11) **EP 0 968 890 A2**
(43) Veröffentlichungstag der Anmeldung: **05.01.2000**
(21) Anmeldenummer: 99110064.5
(22) Anmeldetag: 22.05.1999
(51) Int. Cl.: B60R 21/26, B60R 16/08, B60R 21/00

(54) **Verfahren zum Betreiben einer Druckgaseinrichtung in einem Kraftfahrzeug**

(30) Priorität: 29.06.1998 DE 19829000
(71) Anmelder: Fassbaender, Peter, 71065 Sindelfingen (DE); FS Software & Konstruktionen GmbH, 71032 Böblingen (DE)
(72) Erfinder: Fassbaender, Peter, 71065 Sindelfingen (DE); FS Software & Konstruktionen GmbH, 71032 Böblingen (DE)
(74) Vertreter: Herzog, Friedrich Joachim, Dipl.-Ing.

(57) **Zusammenfassung**

Es wird eine Druckgaseinrichtung (1) für ein Kraftfahrzeug beschrieben, die mit einer Druckgaspatrone (2) versehen ist. Die Druckgaspatrone (2) ist mit einem Steuergerät (6) gekoppelt. Es ist ein Sensor (8) vorgesehen, der zur Erkennung eines Unfalls vorgesehen ist, und der mit dem Steuergerät (6) gekoppelt ist. Die Druckgaspatrone (2) ist mit einem Entlüftungsventil (9) versehen, mit dem die Druckgaspatrone (2) nach der Erkennung eines Unfalls entlüftet werden kann.

## Beschreibung

Die Erfindung betrifft ein Verfahren zum Betreiben einer Druckgaseinrichtung in einem Kraftfahrzeug. Ebenfalls betrifft die Erfindung eine Druckgaseinrichtung für ein Kraftfahrzeug, mit einer Druckgaspatrone, die mit einem Steuergerät gekoppelt ist, und mit einem Sensor, der zur Erkennung eines Unfalls vorgesehen ist, und der mit dem Steuergerät gekoppelt ist

Eine derartiges Verfahren und eine derartige Druckgaseinrichtung sind beispielsweise in der Form eines Airbags oder eines Sidebags in einem Kraftfahrzeug bekannt.

Dort ist eine Druckgaspatrone vorgesehen, die mit einem unter Druck stehenden Gas gefüllt ist. An die Druckgaspatrone ist beispielsweise der Sidebag angeschlossen. Bei einem Unfall wird die Druckgaspatrone ausgelöst. Dies bedeutet, daß das in der Druckgaspatrone enthaltene Gas schlagartig in den Sidebag einströmt und diesen auffüllt. Der Sidebag wird auf diese Weise beispielsweise kissenfürmig aufgeblasen und bildet dann einen Schutz für einen Fahrer des Kraftfahrzeugs. Die Auslösung der Druckgaspatrone und das Auffüllen des Sidebags erfolgt dabei derart schnell, daß der Fahrer noch im Moment des Unfalls vor möglichen Unfallverletzungen geschützt wird.

Ein Sidebag ist vorzugsweise zum Schutz bei einem seitwärtigen Unfall vorgesehen. Beispielsweise bei einem Auffahrunfall ist es möglich, daß die Druckgaspatrone des Sidebags nicht ausgelöst und damit der Sidebag nicht aufgefüllt wird. In diesem Fall ist nach dem Unfall weiterhin die unter Druck stehende Druckgaspatrone in dem Kraftfahrzeug vorhanden.

Ist es nun z.B. im Zusammenhang mit der Bergung des verunglückten Fahrers erforderlich, daß Teile des Kraftfahrzeugs mit Hilfe einer Blechschere oder dergleichen aufgeschnitten werden, so besteht die Möglichkeit, daß bei dieser gewaltsamen Bearbeitung des Kraftfahrzeugs die Druckgaspatrone beschädigt oder zerstört wird. Dies kann dazu führen, daß die Druckgaspatrone explodiert. Ersichtlich stellt dies eine Gefahr für die Kraftfahrzeuginsassen, wie auch für die bergenden Hilfspersonen dar.

Aufgabe der Erfindung ist es, ein Verfahren zum Betreiben einer Druckgaseinrichtung für ein Kraftfahrzeug und eine Druckgaseinrichtung für ein Kraftfahrzeug zu schaffen, die auch nach einem Unfall keine Gefährdung für die Beteiligten darstellen.

Diese Aufgabe wird bei einem Verfahren der eingangs genannten Art erfindungsgemäß dadurch gelöst, daß die Druckgaseinrichtung nach einem Unfall in einen drucklosen Zustand gebracht wird. Bei einer Druckgaseinrichtung der eingangs genannten wird die Aufgabe erfindungsgemäß dadurch gelöst, daß die Druckgaspatrone mit einem Entlüftungsventil versehen ist, mit dem die Druckgaspatrone nach der Erkennung eines Unfalls entlüftet werden kann.

Bei der Erfindung wird zwischen dem Moment, in dem der Unfall geschieht, und der Zeit nach dem Unfall unterschieden. Erfindungsgemäß wird die Druckgaspatrone nach dem Unfall in einen drucklosen Zustand gebracht. Dies wird jedoch derart durchgeführt, daß gegebenenfalls erfolgende Schutzmaßnahmen im Moment des Unfalls dadurch nicht behindert werden. Es wird also die Druckgaspatrone im einfachsten Fall erst dann entlüftet, wenn der Unfall vorbei ist. Wurde die Druckgaspatrone durch den Unfall ausgelöst, wurde also beispielsweise der zugehörige Sidebag aufgefüllt, so ist die Druckgaspatrone bereits drucklos und damit ungefährlich. Wurde die Druckgaspatrone jedoch durch den Unfall - aus welchen Gründen auch immer - nicht ausgelöst, so wird durch die Erfindung gewährleistet, daß auch diese Druckgaspatrone nach dem Unfall entlüftet und damit in einen drucklosen Zustand gebracht wird.

Mit der Erfindung wird somit erreicht, daß nach einer gewissen Zeitdauer nach einem Unfall sämtliche Druckgaseinrichtungen des Kraftfahrzeugs drucklos sind. Von derart drucklosen Einrichtungen kann keine Gefährdung mehr für die Insassen des Kraftfahrzeugs oder für bergende Hilfspersonen ausgehen.

Die Erfindung bezieht sich dabei nicht nur auf die Drucklos-Steuerung von Druckgaspatronen für Airbags, Sidebags oder dergleichen. In gleicher Weise ist die Erfindung ganz allgemein auf Druckeinrichtungen in einem Kraftfahrzeug anwendbar, beispielsweise auf eine pneumatische Federung oder eine pneumatische Niveauregulierung oder dergleichen.

Bei einer vorteilhaften Ausgestaltung der Erfindung, bei der die Druckgaseinrichtung eine Druckgaspatrone aufweist, und bei der das Kraftfahrzeug mit einem Sensor zum Erkennen eines Unfalls versehen ist, wird die Druckgaspatrone nach dem Erkennen eines Unfalls entlüftet. Dies stellt die spezielle Anwendung des erfindungsgemäßen Verfahrens auf bekannte Airbag- oder Sidebag-Einrichtungen dar. In diesen Fällen wird die Drucklos-Steuerung der Druckgaseinrichtung des Kraftfahrzeugs durch die Entlüftung der Druckgaspatrone erreicht.

Besonders vorteilhaft ist es, wenn die Druckgaspatrone nach einer vorgebbaren Zeitdauer entlüftet wird. Unter dem Entlüften der Druckgaspatrone wird dabei verstanden, daß das in der Druckgaspatrone enthaltene Gas zumindest nicht schlagartig ausströmt. Auf diese Weise wird einerseits eine Beeinflussung oder gar Behinderung einer möglichen, durch den Unfall hervorgerufenen Auffüllung des zugehörigen Airbags oder Sidebags vermieden. Andererseits wird damit gewährleistet, daß die Druckgaspatrone nach der vorgebbaren Zeitdauer und nach Ablauf einer Entlüftungsdauer in jedem Fall drucklos und damit ungefährlich ist.

Bei einer vorteilhaften Weiterbildung der Erfindung wird die Druckgaspatrone unabhängig davon entlüftet, ob sie durch den Unfall bereits ausgelöst worden ist oder nicht. Dies bringt die wesentliche Vereinfachung mit sich, daß nicht zwischen ausgelösten und nicht-ausgelösten Druckgaspatronen unterschieden werden muß. Statt dessen werden alle Druckgaspatronen des Kraftfahrzeugs entlüftet, so daß in jedem Fall die gesamte Druckgaseinrichtung des Kraftfahrzeugs drucklos wird.

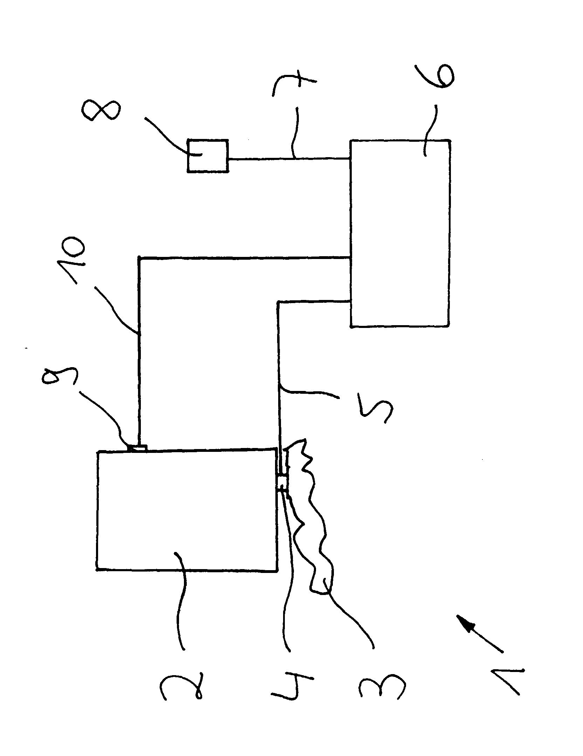

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockschaltbild eines Ausführungsbeispiels einer erfindungsgemäßen Druckgaseinrichtung für ein Kraftfahrzeug.

In der Figur ist eine Druckgaseinrichtung 1 für ein Kraftfahrzeug dargestellt. Dabei kann es sich um eine Einrichtung zum Betreiben eines Airbags und/oder eines Sidebags und/oder eines Windowbags und/oder eines Gurtstraffers und/oder dergleichen handeln. Ebenfalls kann es sich um eine Einrichtung zum Betreiben einer pneumatischen Federung und/oder einer pneumatischen Niveauregulierung und/oder dergleichen handeln.

Die Druckgaseinrichtung 1 weist eine Druckgaspatrone 2 auf, in der im Ausgangszustand ein Gas unter Druck enthalten ist. Bei der Druckgaspatrone 2 kann es sich um eine ähnliche Druckgaspatrone handeln, wie sie bei bekannten Einrichtungen für einen Sidebag oder einen Gurtstraffer vorhanden sind.

Die Druckgaseinrichtung 1 ist mit einem Sidebag 3 versehen, der über ein Auslöseventil 4 an die Druckgaspatrone 2 angeschlossen ist. Der Sidebag 3 ist im dargestellten Ausgangszustand nicht aufgefüllt. Es versteht sich, daß anstelle des Sidebags 3 auch ein Gurtstraffer oder dergleichen an das Auslöseventil 4 angeschlossen sein können.

Das Auslöseventil 4 ist elektrisch ansteuerbar. Dies bedeutet, daß das Auslöseventil 4 mittels eines elektrischen Signals von seinem im Ausgangszustand geschlossenen Zustand in einen geöffneten Zustand überführbar ist. Das Auslöseventil 4 ist dabei derart ausgebildet, daß dieser Übergang nahezu schlagartig erfolgt.

Zur elektrischen Ansteuerung ist das Auslöseventil 4 über eine elektrische Verbindung 5 mit einem Steuergerät 6 gekoppelt. Bei dem Steuergerät 6 kann es sich um eine elektrische Schaltung handeln, die beispielsweise in einem Halbleiterchip integriert ist. Ebenfalls kann es sich bei dem Steuergerät 6 um einen Mikroprozessor oder dergleichen handeln.

Mit dem Steuergerät 6 ist über eine elektrische Verbindung 7 ein Sensor 8 gekoppelt. Der Sensor 8 ist ganz allgemein dazu vorgesehen, einen Unfall zu erkennen.

Insbesondere handelt es sich bei dem Sensor 8 um einen Beschleunigungssensor. Die von dem Sensor gemessene Beschleunigung wird an das Steuergerät 6 weitergegeben. Wird in diesem Fall von diesem Sensor 8 eine Beschleunigung detektiert, die größer ist als ein vorgebbarer Beschleunigungswert, so wird von dem Steuergerät 6 auf einen Unfall geschlossen.

Im vorliegenden Beispielfall des Sidebags 3 wird bei einer Querbeschleunigung des Kraftfahrzeugs, die den vorgebbaren Beschleunigungswert übesteigt, von dem Steuergerät 6 auf einen Unfall geschlossen. Es wird daraufhin von dem Steuergerät 6 das Auslöseventil 4 angesteuert und schlagartig geöffnet. Dies hat zur Folge, daß der Sidebag 3 von dem in der Druckgaspatrone 2 enthaltenen Gas ebenfalls schlagartig aufgefüllt wird.

Dies alles geschieht in einer äußerst kurzen Zeitdauer. Damit wird erreicht, daß beispielsweise ein Fahrer des Kraftfahrzeugs noch im Moment des Unfalls durch den Sidebag 3 vor möglichen unfallbedingten Verletzungen geschützt wird.

Es ist möglich, daß beispielsweise bei einem Auffahrunfall des Kraftfahrzeugs der beschriebene Sidebag 3 aufgrund der fehlenden Querbeschleunigung - korrekterweise - nicht ausgelöst wird. Damit ist die Druckgaspatrone 2 mit dem darin unter Druck enthaltenen Gas weiterhin in dem Kraftfahrzeug vorhanden.

Es ist ebenfalls möglich, daß es beispielsweise zur späteren Bergung des verunglückten Kraftfahrzeugs oder des verunglückten Fahrers erforderlich ist, irgendwelche Blechteile des Kraftfahrzeugs in irgendeiner Weise, beispielsweise mit einer Blechschere oder dergleichen aufzutrennen. Dies birgt die Gefahr in sich, daß bei einem derartigen Vorgang die noch unter Druck stehende Druckgaspatrone 2 zerstört wird und dabei gegebenenfalls explodiert. Diese Gefahr ist insbesondere bei einem Windowbag vorhanden, dessen Druckgaspatrone 2 üblicherweise in einer der Säulen des Kraftfahrzeugs, beispielsweise in der C-Säule untergebracht ist.

Damit dies vermieden wird, ist die Druckgaspatrone 2 mit einem Entlüftungsventil 9 versehen, bei dem es sich beispielsweise um ein Drosselventil handeln kann. Das Entlüftungsventil 9 ist elektrisch ansteuerbar. Dies bedeutet, daß das Entlüftungsventil 9 mittels eines elektrischen Signals von seinem im Ausgangszustand geschlossenen Zustand in einen geöffneten Zustand überführbar ist. Das Entlüftungsventil 9 ist dabei derart ausgebildet, daß dieser Übergang und die nachfolgende Entlüftung nicht schlagartig, sondern eher langsam erfolgt.

Das Entlüftungsventil 9 ist über eine elektrische Verbindung 10 mit dem Steuergerät 6 gekoppelt. Damit ist es möglich, daß das Entlüftungsventil 9 von dem Steuergerät 6 ausgelöst und daraufhin die Druckgaspatrone 2 entlüftet wird.

Wird von dem Steuergerät 6 mit Hilfe des Sensors 8 ein Unfall erkannt, so wird daraufhin das Entlüftungsventil 9 angesteuert und die Druckgaspatrone 2 wird entlüftet. Diese Entlüftung wird dabei derart durchgeführt, daß sie die beschriebene, gegebenenfalls durchgeführte Auffüllung des Sidebags 3 über das Auslöseventil 4 in keinem Fall behindert.

Wenn man die Auffüllung des Sidebags 3 über das Auslöseventil 4 als in dem Moment des Unfalls erfolgend bezeichnet, so erfolgt die Entlüftung der Druckgaspatrone 2 über das Entlüftungsventil 9 nach dem Unfall.

Verallgemeinert wird also die Druckgaseinrichtung 1 des Kraftfahrzeugs nach einem Unfall - also nicht im Moment des Unfalls - in einen drucklosen Zustand gebracht.

Damit besteht keine Gefahr mehr, daß die Druckgaspatrone 2 der Druckgaseinrichtung 1 bei einer späteren Bergung explodieren kann.

Es ist möglich, daß das Steuergerät 6 das Entlüftungsventil 9 nach einer vorgebbaren Zeitdauer nach der Erkennung eines Unfalls ansteuert und damit öffnet. Dabei kann es sich beispielsweise um eine Zeitdauer im Zehn-Sekunden-Bereich handeln. Dies hat dann zur Folge, daß die Druckgaspatrone 2 nach einer Gesamtzeitdauer, die sich aus der vorgebbaren Zeitdauer und einer Entlüftungsdauer zusammensetzt, drucklos und damit ungefährlich ist.

Des weiteren kann zwischen solchen Druckgaspatronen 2 unterschieden werden, die aufgrund des Unfalls durch das Auslöseventil 4 ausgelöst worden sind, und solchen Druckgaspatronen 2, die nicht ausgelöst worden sind. Durch diese Unterscheidung ist es möglich, daß nur die nicht-ausgelösten Druckgaspatronen 2 über das Entlüftungsventil 9 drucklos gesteuert werden.

Anstelle der beschriebenen elektrischen Ansteuerung des Entlüftungsventils 9 ist es ebenfalls möglich, die Entlüftung der Druckgaspatrone 2 auf eine mechanische Art und Weise auszulösen.

Ebenfalls ist es möglich, daß das Entlüftungsventil 9 bereits im Moment des Unfalls, also gegebenenfalls zusammen mit dem Auslöseventil 4 von dem Steuergerät 6 angesteuert und geöffnet wird. Dabei kann, muß aber nicht zwischen nicht-ausgelösten und ausgelösten Druckgaspatronen 2 unterschieden werden.

Aufgrund der drosselnden Funktion des Entlüftungsventils 9 hat dessen Entlüftung bei einer gleichzeitigen Auslösung der Druckgaspatrone 2 durch das Auslöseventil 4 keinen oder nur einen vernachlässigbar geringen Einfluß auf das schnelle Auffüllen des Sidebags 3.

Entsprechendes gilt auch für den möglichen Fall, daß aufgrund des Unfallhergangs von dem Steuergerät 6 zwei oder mehr zeitlich kurz aufeinanderfolgende Unfälle erkannt werden, die jeweils für sich den vorgebbaren Beschleunigungswert überschreiten. Aufgrund der drosselnden Funktion des Entlüftungsventils 9 kann somit auch noch in einem der später erkannten Zeitpunkte von der Druckgaspatrone 2 über das Auslöseventil 4 der Sidebag 3 ausreichend schnell aufgefüllt werden.

Die beschriebene Entlüftung der Druckgaspatrone 2 erfolgt automatisch durch das Steuergerät 6 nach einem erkannten Unfall. Ebenfalls ist es möglich, daß die Entlüftung der Druckgaspatrone 2 manuell von einer Hilfsperson oder einem der Fahrzeuginsassen nach einem Unfall durchgeführt wird. In diesem Fall ist es gegebenenfalls ausreichend, das Entlüftungsventil 9 mit einer entsprechenden Betätigungseinrichtung zu koppeln.

## Patentansprüche

1. Verfahren zum Betreiben einer Druckgaseinrichtung (1) in einem Kraftfahrzeug, dadurch gekennzeichnet, daß die Druckgaseinrichtung (1) nach einem Unfall automatisch in einen drucklosen Zustand gebracht wird.

2. Verfahren nach Anspruch 1, wobei die Druckgaseinrichtung (1) eine Druckgaspatrone (2) aufweist, und wobei das Kraftfahrzeug mit einem Sensor (8) zum Erkennen eines Unfalls versehen ist, dadurch gekennzeichnet, daß die Druckgaspatrone (2) nach dem Erkennen eines Unfalls automatisch entlüftet wird.

3. Verfahren nach einem der Ansprüche 1 oder 2, dadurch gekennzeichnet, daß die Druckgaspatrone (2) nach einer vorgebbaren Zeitdauer entlüftet wird.

4. Verfahren nach einem der Ansprüche 1 bis 3, dadurch gekennzeichnet, daß die Druckgaspatrone (2) unabhängig davon entlüftet wird, ob sie durch den Unfall bereits ausgelöst worden ist oder nicht.

5. Druckgaseinrichtung (1) für ein Kraftfahrzeug, mit einer Druckgaspatrone (2), die mit einem Steuergerät (6) gekoppelt ist, und mit einem Sensor (8), der zur Erkennung eines Unfalls vorgesehen ist, und der mit dem Steuergerät (6) gekoppelt ist, dadurch gekennzeichnet, daß die Druckgaspatrone (2) mit einem Entlüftungsventil (9) versehen ist, mit dem die Druckgaspatrone (2) nach der Erkennung eines Unfalls entlüftet werden kann.

6. Druckgaseinrichtung (1) nach Anspruch 5, dadurch gekennzeichnet, daß das Entlüftungsventil (9) ein Drosselventil ist.

7. Druckgaseinrichtung (1) nach einem der Ansprüche 5 oder 6, dadurch gekennzeichnet, daß das Entlüftungsventil (9) mit dem Steuergerät (6) gekoppelt ist.

8. Druckgaseinrichtung (1) nach einem der Ansprüche 5 bis 7, dadurch gekennzeichnet, daß die Druckgaspatrone (2) mit einem Auslöseventil (4) versehen ist, das mit dem Steuergerät (6) gekoppelt ist.

9. Druckgaseinrichtung (1) nach einem der Ansprüche 5 bis 8, dadurch gekennzeichnet, daß die Druckgaspatrone (2) einem Airbag und/oder einem Sidebag (3) und/oder einem Windowbag und/oder einem Gurtstraffer und/oder dergleichen zugeordnet ist.

10. Druckgaseinrichtung (1) nach einem der Ansprüche 6 bis 9, dadurch gekennzeichnet, daß der Sensor (8) ein Beschleunigungssensor ist.
